# EUROPEAN PATENT SPECIFICATION

(11) **EP 1 745 474 B1**
(45) Date of publication and mention of the grant of the patent: **23.01.2008**
(21) Application number: 05733776.8
(22) Date of filing: 28.04.2005
(51) Int. Cl.: G11B 7/085

(54) **RAIL FRICTION CALIBRATION**
SCHIENENREIBUNGS-KALIBRATION
SYSTEME D'ETALONNAGE DE FROTTEMENT MUNI D'UN RAIL

(30) Priority: 04.05.2004 EP 04101896
(43) Date of publication of application: 24.01.2007
(73) Proprietor: Koninklijke Philips Electronics N.V., 5621 BA Eindhoven (NL)
(72) Inventor: HELWEGEN, Ivon, F., NL-5656 AA Eindhoven (NL); VERBERNE, Henricus, R., M., NL-5656 AA Eindhoven (NL)
(74) Representative: van de Ven, Jan-Piet
(86) International application number: PCT/IB2005/051386
(87) International publication number: WO 2005/106859

(56) References cited:
- EP-A- 0 878 800
- DE-A1- 19 703 374
- US-A- 5 808 975
- US-A- 6 154 424
- US-A1- 2002 138 783
- US-B1- 6 222 802

## Description

The invention relates to a device for scanning a selected track in a pattern of substantially parallel tracks on a record carrier via a beam of radiation, the device comprising a head for providing the beam, and tracking servo means for positioning the head on the track.

The invention further relates to a method of calibration for determining a rail friction profile to be stored in the device.

US Patent 5,808,975 describes an optical storage device. The device has a head on a carriage for generating a scanning spot on the track via a beam of light: The optical storage device is equipped with a positioning system to position the head on a selected track of a record carrier by moving the carriage along a rail via a motor, such positioning usually called seeking. The motor is controlled via a servo loop that includes a position detection unit, which unit determines a present position from reading a present track, and a distance traveled and a speed during seek based on counting tracks. Hence the actual head position is known. In a calibration process a bias current measuring unit measures a drive current for a motor when the head is moved to and held on a plurality of measurement positions. The measured current is stored as a bias current to remove mechanical offset. A bias current operating unit obtains a corresponding bias current from a storage unit on the basis of the actual head position during the seeking operation. The bias current is added to the drive current generated in the servo loop. According to the document the bias current removes a disturbance component due to friction and mechanical offset. However, in practice the disturbance is not effectively removed.

A further optical storage device is known from EP 0 878 800 A2 used for two-part delimitation of appended claim 1.

Therefore it is an object of the invention to provide a tracking servo adjustment system in a scanning device that provides a more effective compensation of friction.

According to a first aspect of the invention the object is achieved with a scanning device as defined in the opening paragraph, in which device the tracking servo means comprise, for constituting a main servo loop, a motor for moving the head along a rail transverse to the tracks, position means for generating a position signal in dependence of an actual position of the head, and amplifying means having an adjustable gain for, in dependence on the position signal and a target position, generating a driving signal coupled to the motor, tracking adjustment means for adjusting the gain in dependence on a friction profile, and means for storing the friction profile as determined during a calibration process.

According to a second aspect of the invention the object is achieved with a method as defined in the opening paragraph, which method comprises detecting a friction value of a plurality of parts of the rail by determining a minimum amount of power of the driving signal which is sufficient to move the head along said parts.

Due to storing and using the gain adjustments of the friction profile the gain of the main servo loop is adjusted according to friction detected along the rail. Thereby the drive current generated in the main servo loop is additionally amplified in areas of the rail where there is increased friction. This has the advantage that the power needed for moving the head is reduced, because strong drive currents are only generated in the main servo loop when necessary, i.e. for parts of the rail having a high friction. This is particularly important for battery powered devices.

The invention is also based on the following recognition. From the prior art document US 5,808,975 described above it is known to add a bias current to the drive motor. The inventors have seen that such a fixed additional bias current does not properly compensate for friction, but that friction causes a reduced servo loop gain. Due to the reduced loop gain the control behavior of the servo loop deviates from the intended and designed behavior, e.g. a response to a movement command is executed less precisely, usually called overshoot or undershoot. The deviating behavior as such is not corrected by adding bias current. However, by adjusting the gain as in the current invention, the control behavior is maintained as originally intended. Moreover, in the document the bias current is measured by holding the carriage at a number of positions. The inventors have seen that such measured bias currents reflect the tension or remaining force on the carriage, e.g. resulting from strain in the wires to the head. In addition the inventors have seen that the bias current can only be applied to a DC motor, but does not properly control various other types of motors, such as synchronous motors (e.g. stepper motors or 3 phase motors).

In an embodiment of the device the tracking adjustment means are arranged for storing the friction profile as a sequence of gain values for subsequent parts of the rail. This has the advantage that the adjustable gain of the amplifier can be easily set in dependence of the position of the head during the seek operation.

In an embodiment of the device the tracking adjustment means are arranged for performing the calibration process. Although the calibration process may be performed at manufacture only, it is preferred to regularly update the friction profile. For example calibration may be performed if a predetermined period of time has lapsed since a previous calibration process; if a predetermined amount of operational use has lapsed since a previous calibration process; if the device is coupled to a mains power source; if an amount of positioning errors after a head movement is detected; or if an amount of deviation in the positioning errors is exceeded.

In an embodiment of the device the calibration process comprises detecting a friction value of at least one part of the rail by determining a minimum amount of power of the driving signal which is sufficient to move the head along said part. This has the advantage that the amount of power for just moving the head is a reliable indicator for the amount of friction at the respective part of the rail.

Further preferred embodiments of the device according to the invention are given in the further claims.

These and other aspects of the invention will be apparent from and elucidated further with reference to the embodiments described by way of example in the following description and with reference to the accompanying drawings, in which
Fig. 1a shows a disc-shaped record carrier,
Fig. 1b shows a cross-section taken of the record carrier,
Fig. 2 shows a scanning device having rail friction adjustment,
Fig. 3 shows a tracking servo system,
Fig. 4 shows a division of a rail into slices for managing friction,
Fig. 5 shows a rail friction profile, and
Fig. 6 shows a rail friction calibration process.
In the Figures, elements which correspond to elements already described have the same reference numerals.

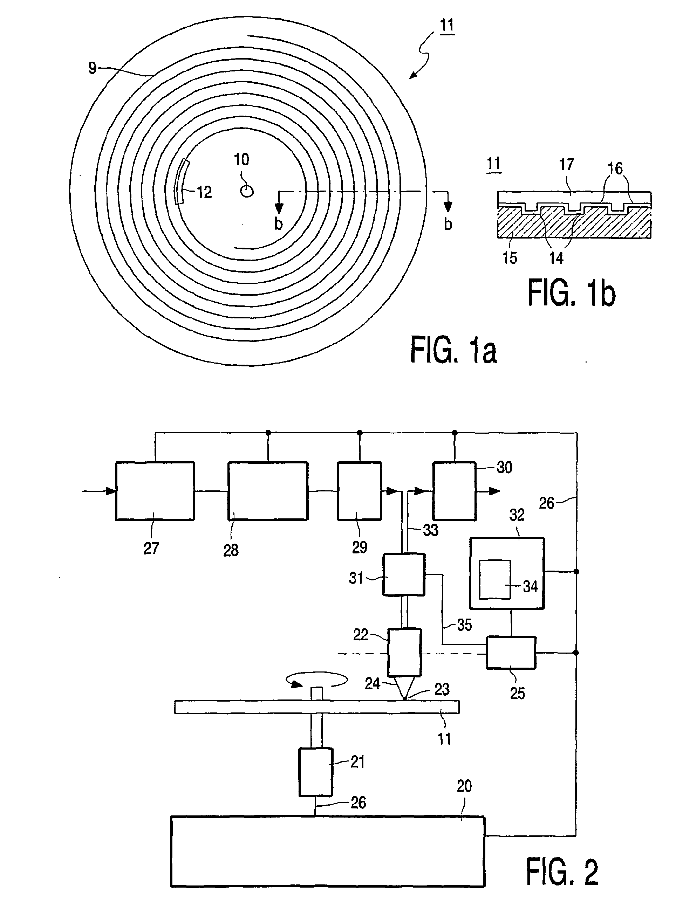

Figure 1a shows a disc-shaped record carrier 11 having a track 9 and a central hole 10. The track 9 is arranged in accordance with a spiral pattern of turns constituting substantially parallel tracks on an information layer. The record carrier may be an optical disc having an information layer of a recordable type. Examples of a recordable disc are the CD-R and CD-RW, the DVD+RW, and the Blu-ray Disc (BD). The track 9 on the recordable type of record carrier is indicated by a pre-embossed track structure provided during manufacture of the blank record carrier, for example a pregroove. Recorded information is represented on the information layer by optically detectable marks recorded along the track. The marks are constituted by variations of a physical parameter and thereby have different optical properties than their surroundings, e.g. variations in reflection. Control parameters as defined in a recording format may be recorded in a predefined area 12.

Figure 1b is a cross-section taken along the line b-b of the record carrier 11 of the recordable type, in which a transparent substrate 15 is provided with a recording layer 16 and a protective layer 17. The track structure is constituted, for example, by a pregroove 14 which enables a read/write head to follow the track 9 during scanning. The pregroove 14 may be implemented as an indentation or an elevation, or may consist of a material having a different optical property than the material of the pregroove. The pregroove enables a read/write head to follow the track 9 during scanning. A track structure may also be formed by regularly spread sub-tracks which periodically cause servo signals to occur. The record carrier may be intended to carry real-time information, for example video or audio information, or other information, such as computer data.

Figure 2 shows a scanning device having rail friction adjustment. The device is provided with means for scanning a track on a record carrier 11, which means include a drive unit 21 for rotating the record carrier 11, a head 22, a tracking servo unit 25 for positioning the head 22 on the track and a control unit 20. The head 22 comprises an optical system of a known type for generating a radiation beam 24 guided through optical elements focused to a radiation spot 23 on a track of the information layer of the record carrier. The radiation beam 24 is generated by a radiation source, e.g. a laser diode. The head may contain all optical elements, the laser and detectors as an integrated unit, usually called Optical Pickup Unit (OPU), or may contain as a movable unit only some of the optical elements, while the remaining optical elements and laser and detector are located in a unit on a fixed mechanical location, usually called split-optics, the beam being transferred between both units, e.g. via a mirror. The head further comprises (not shown) a focusing actuator for focusing the beam to the radiation spot on the track by moving the focus of the radiation beam 24 along the optical axis of said beam, and a tracking actuator for fine positioning of the spot 23 in a radial direction on the center of the track. The tracking actuator may comprise coils for radially moving an optical element or may alternatively be arranged for changing the angle of a reflecting element. For reading the radiation reflected by the information layer is detected by a detector of a usual type, e.g. a four-quadrant diode, in the head 22 for generating detector signals coupled to a front-end unit 31 for generating various scanning signals, including a main scanning signal 33 and error signals 35 for tracking and focusing. The error signals 35 are coupled to the tracking servo unit 25 for controlling said positioning of the head and the tracking actuators. The main scanning signal 33 is processed by read processing unit 30 of a usual type including a demodulator, deformatter and output unit to retrieve the information.

The control unit 20 controls the scanning and retrieving of information and may be arranged for receiving commands from a user or from a host computer. The control unit 20 is connected via control lines 26, e.g. a system bus, to the other units in the device. The control unit 20 comprises control circuitry, for example a microprocessor, a program memory and interfaces for performing the procedures and functions as described below. The control unit 20 may also be implemented as a state machine in logic circuits.

The device may be provided with recording means for recording information on a record carrier of a writable or re-writable type. The recording means cooperate with the head 22 and front-end unit 31 for generating a write beam of radiation, and comprise write processing means for processing the input information to generate a write signal to drive the head 22, which write processing means comprise an input unit 27, a formatter 28 and a modulator 29. For writing information the power of the beam of radiation is controlled by modulator 29 to create optically detectable marks in the recording layer. The marks may be in any optically readable form, e.g. in the form of areas with a reflection coefficient different from their surroundings, obtained when recording in materials such as dye, alloy or phase change material, or in the form of areas with a direction of polarization different from their surroundings, obtained when recording in magneto-optical material.

In an embodiment the input unit 27 comprises compression means for input signals such as analog audio and/or video, or digital uncompressed audio/video. Suitable compression means are described for video in the MPEG standards, MPEG-1 is defined in ISO/IEC 11172 and MPEG-2 is defined in ISO/IEC 13818. The input signal may alternatively be already encoded according to such standards.

The improvements described below relate to an optical disc drive sledge mechanism. In order to be able to read/write selected tracks on a complete disc the head is mounted on a movable sledge. This sledge is movable from an inner to an outer radius of the optical disc. Data to be accessed subsequently may be scattered all over the disc requiring jumping of the laser spot from one (defined) place on the disc to another (also defined place). Hence the jumps are needed to access the complete disc; the process usually called seeking featuring the sledge for radially positioning the head. The sledge moves on rails. Because of dirt, dust, tiny scratches, mechanical differences etc. the friction of the rail is position dependent. The improvements are to store information on rail friction during a calibration process and during seeking adapt the gain of the sledge driver loop on the rail friction. Hence the loop gain of the loop is maintained substantially as desired, which results in a reliable and accurate response of the tracking servo system to jump commands.

The improvements are particularly relevant for so called small form factor devices, (or more general battery powered, portable devices), as the amount of power dissipated during seeking in the tracking servo system may be reduced. The reduction is achieved by generating drive signals that are just strong enough for moving the sledge and head. Also in other types of optical disc drives wear and dissipation may advantageously be reduced.

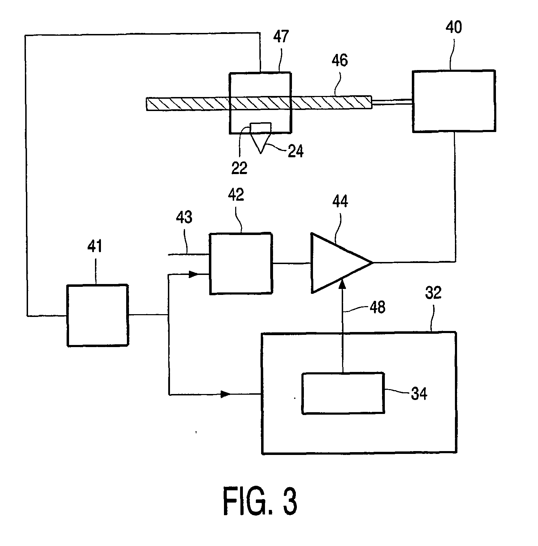

Figure 3 shows a tracking servo system, which corresponds to the tracking servo unit 25 in Figure 2, and is arranged for positioning the head on the track. The head 22 is mounted on a surrounding support unit, usually called sledge or carriage 47, which is mechanically coupled to a rail 46. A motor 40 is coupled to the carriage 47 for moving the head 22 along the rail transverse to the tracks. In practical embodiments the rail 46 may include supporting rail on which the carriage is positioned by wheels, a longitudinal worm axis, etc, all well known in the art of mechanical construction of optical disc drives.

The tracking servo system includes, for constituting a main servo loop, the motor 40, a position unit 41 for generating a position signal in dependence of an actual position of the head, and an amplifying unit 44 that has an adjustable gain input 48. The amplifying unit 44 generates a driving signal coupled to the motor 40 based on an error signal from error unit 42 that receives as input a selected target position signal 43 and the position signal. The adjustable gain input 48 is coupled to a friction memory 34 that stores a friction profile as determined during a calibration process. The memory 34 is controlled by the rail friction adjustment unit 32, which is coupled to the position unit 41 for constituting tracking adjustment by adjusting the gain in dependence on the friction profile. When a jump needs to be made, the rail friction adjustment unit 32 needs to look into a lookup table in the memory 34 to know which gain(s) it needs to use when the head is moving along the rail. Hence stored friction values from memory 34 are applied to adjust the gain of amplifying unit 44 in dependence of the actual position of the head. Carriage servo loops may already have dynamic gain control (so gain is not fixed). In this case the rail friction entries in the look-up table 34 are recomputed to delta gain values by the rail friction adjustment unit 32.

The position unit 41 may include a position sensor for detecting the actual position of the head relative to the mechanical range of movement. Alternatively or additionally the position unit may be arranged to read information from the tracks of the record carrier for detecting the actual position of the head. During movement of the head along the rail a track crossing signal may be generated, and the tracks crossed may be counted. Also the position of the head during movement may be derived from a rotation sensor coupled to the motor 40. Such position detection systems are well known in the art.

In an embodiment the position unit 41 is arranged for generating the position signal for the actual position in dependence on a calculated position based on an amount of rotation of the motor. The position unit may determine the amount of rotation of the motor based on the driving signals coupled to the motor. For example the motor may be arranged as a stepping motor. The number of pulses applied to the stepping motor may be counted. Alternatively the motor may be a synchronous motor, driven by sinusoidal drive signals having a known period related to the amount of rotation of the motor. In particular the position unit may include a calibration memory containing at least a conversion parameter that indicates the actual relation between the movement of the head in mm and the controlled periodic drive signals to the motor. It is noted that for such relation to be reliable it is required that the motor (e.g. of the synchronous or stepping type) is able to rotate according to the drive signals without slipping. To this end it is required that the drive signals are of sufficient strength to overcome friction along the rail. This is achieved in a power efficient way by applying the gain adjustments as described above.

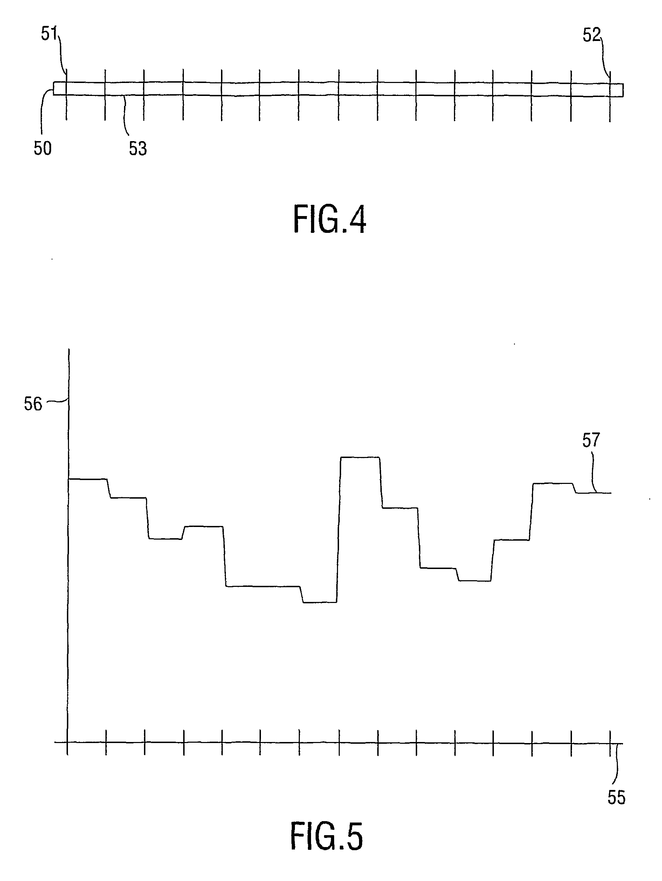

Figure 4 shows a division of a rail into slices for managing friction. A rail 50 is schematically shown from an inner radius 51 (e.g. 6 mm) to an outer radius 52 (e.g. 13 mm for a small form factor device). The rail 51 is divided into slices 53 of e.g. 0.5 mm. In a calibration process for each slice a friction is determined, and a value for adjusting the gain is based on the friction. The value is stored in a memory in the device. The gain setting may be inversely proportional to the friction determined. In practical circumstances a somewhat stronger or weaker adjustment relation may be applied.

A calibration process may be performed as follows. On each slice, a sequence of seek actions are done, but on each seek action, the output power of the sledge driver is decreased until the power is just high enough to let the sledge make the desired move. This amount of power may be detected because, when the power is made lower, the sledge is stuck somewhere on the rail, or the desired seek distance is not reached. Obviously, the power may also be increased until the sledge just starts moving, and arrives on the target location. The gain setting is calculated in proportion to the power that has been determined, and is stored in a non-volatile memory in the device.

It is noted that the calibration process may be performed during manufacture of the device, and the results stored at final stage of assembly of the device. However it is preferred to regularly perform the calibration process to account for changes in the rail friction, for example during a maintenance process.

In an embodiment the tracking adjustment means 32 are arranged for performing the calibration process. Hence the function of performing the calibration process is included in the device itself. As explained above the calibration process may include detecting a friction value of the subsequent parts of the rail by determining a minimum amount of power of the driving signal which is sufficient to move the head along said part.

In an embodiment the tracking adjustment means are arranged for determining the friction profile by deriving a gain value corresponding to said minimum amount augmented by a predefined margin. In particular a fixed or proportional margin may be added to accommodate for small changes or errors in the friction profile, to prevent the sledge from getting stuck.

Figure 5 shows a rail friction profile. On a horizontal axis 55 the rail slices are indicated corresponding to Figure 4, from an inner radius to an outer radius of a record carrier to be scanned, covering the range of movement of the sledge in the device. On a vertical axis 56 the gain to be used to generate sufficient drive power is indicated. The gain values indicated provide a practical example of gain settings to be applied in dependence of the position of the head. The gain values may be applied directly when the sledge enters a slice, or a gain value may be calculated by linear interpolation or other curve fitting techniques and subsequently applied in dependence of the actual position of the head.

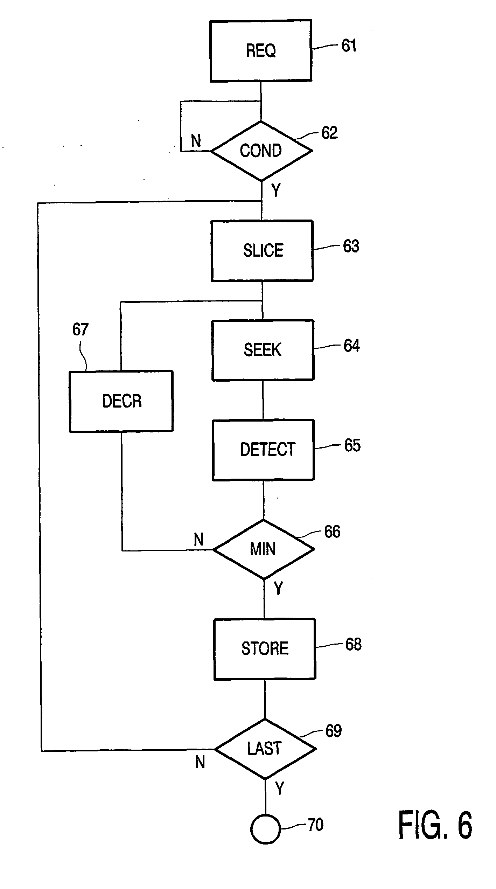

Figure 6 shows a rail friction calibration process. It is noted that the calibration process may be performed in the tracking adjustment means 32, in a central processor of the optical disc drive, or via a remote processing unit, e.g. under control of a host computer implemented in a software product such as a driver. Calibration may be first time done in the factory, or when the drive detects its first power on. Subsequently the disc drive may recalibrate the rail friction when it detects a need to recalibrate (to much seek mismatches, once a week or month, etc.).

In a first step 61 REQ it is determined if a new calibration process is required. The need for starting the calibration process may be detected in various ways. For example a timekeeping mechanism is implemented to detect if a predetermined period of time has lapsed since a previous calibration process, e.g. a clock/calendar unit and memory storing a date of the last effective calibration. Alternatively, or in combination, it may be determined if a predetermined amount of operational use has lapsed since a previous calibration process, e.g. a number of power-on hours or a number of seeks.

The need for a new calibration process may also be based on detecting positioning errors during normal use, i.e. start if an amount of positioning errors after a head movement is detected, or if an amount of deviation in the positioning errors is exceeded. It is noted that the actual occurrence of positioning errors during use is a clear indication that the rail friction profile does not correspond any longer to the actual friction. Both overshoot and undershoot in the position are a sign of incorrect loop gain in the main tracking servo loop.

In a second step 62 COND further conditions may be tested before actually starting the calibration process. In particular it may be determined if the operational circumstances allow the calibration to be performed. This may for example be derived from the recent history of accessing the record carrier by the user, or by actively asking permission to the user to perform calibration. Further conditions may include detecting if the device is coupled to a mains power source. It is noted that calibration requires a substantial amount of power, which preferably is not consumed from a battery.

In an embodiment the condition for starting calibration includes performing the calibration process as a background process when no scanning of the tracks is required. The calibration process is started as soon as there is idle time in which the user applications do not require disc access. The calibration process is interrupted as soon as the user applications do require disc access, and resumed afterwards. Intermediate results, such as a partial friction profile, may be stored in a temporary memory.

The actual calibration process is performed for a number of subsequent slices of the rail as described above with reference to Figures 4 and 5. In a step SLICE 63 a part of the rail (slice) is selected for detecting the local friction. In a step SEEK 64 a seek operation is performed, e.g. by moving from outside the current slice to a target position inside the slice. In a step DETECT 65 the actual position achieved after the seek operation is detected and compared to the target position. The amount of power needed, or the gain setting used, is detected. Obviously, during calibration, the previous gain adjustment from the old rail friction profile is switched off, e.g. replaced by a predefined fixed gain setting. In a step MIN 66 it is determined if the minimal amount of gain is found for still moving the head to the target position. The minimal amount may be detected if a predetermined position error threshold is surpassed. If the minimum has not yet been found, in a step DECR 67 the gain is subsequently decreased, e.g. by a predetermined quantity, and a new seek is performed by returning to step SEEK 64. If the minimum has been found, in a step STORE 68 the gain value is stored, for example in a temporary memory. In step LAST 69 it is tested if all relevant parts of the rail have been calibrated. If not, a next slice is selected by returning to step SLICE 63. Finally, after for all slices of the rail a valid friction has been found, in step 70 the new rail friction profile is stored in the non volatile memory for the friction profile.

In an embodiment a re-calibration process is performed for a limited area of the rail only. In step REQ 61 now detects the need of calibration for separate areas of the rail, e.g. by keeping error statistics for each of those areas. If a certain area needs calibration, the remaining steps indicated in Figure 6 are performed for that area only, and the final rail friction profile is put together using the existing values for the areas that do no require recalibration.

Although the invention has been mainly explained by embodiments using disc shaped optical record carriers, the invention is also suitable for other record carriers such as rectangular optical cards, magnetic discs or any other type of information storage system that needs positioning a head. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software.

## Claims

1. Device for scanning a selected track in a pattern of substantially parallel tracks on a record carrier (11) via a beam of radiation (24), the device comprising
- a head (22) for providing the beam,
- tracking servo means (25) for positioning the head on the track, the tracking servo means comprising, for constituting a main servo loop, a motor (40) for moving the head along a rail (46) transverse to the tracks, position means (41) for generating a position signal in dependence of an actual position of the head, and amplifying means (44) having an adjustable gain for, in dependence on the position signal and a target position, generating a driving signal coupled to the motor, **characterized in that** the device further comprising :
- tracking adjustment means (32) for adjusting the gain in dependence on a friction profile, and
- means (34) for storing the friction profile as determined during a calibration process.

2. Device as claimed in claim 1, wherein the tracking adjustment means (32) are arranged for storing the friction profile as a sequence of gain values (57) for subsequent parts of the rail.

3. Device as claimed in claim 1, wherein the tracking adjustment means (32) are arranged for performing the calibration process.

4. Device as claimed in claim 3, wherein the calibration process comprises detecting a friction value of at least one part of the rail by determining a minimum amount of power of the driving signal which is sufficient to move the head along said part.

5. Device as claimed in claim 4, wherein the calibration process comprises determining the minimum amount of power by sequentially reducing the amount of power until an expected move distance is not achieved, or by sequentially increasing the amount of power until an expected move distance is achieved.

6. Device as claimed in claim 4, wherein the calibration process comprises determining the friction profile by deriving a gain value corresponding to said minimum amount augmented by a predefined margin.

7. Device as claimed in claim 3, wherein the tracking adjustment means (32) are arranged for performing the calibration process based on at least one of the following conditions:
- if a predetermined period of time has lapsed since a previous calibration process;
- if a predetermined amount of operational use has lapsed since a previous calibration process;
- if the device is coupled to a mains power source;
- if an amount of positioning errors after a head movement is detected;
- if an amount of deviation in the positioning errors is exceeded.

8. Device as claimed in claim 3, wherein the tracking adjustment means (32) are arranged for performing the calibration process as a background process when no scanning of the tracks is required.

9. Device as claimed in claim 1, wherein the position means (41) are arranged for generating the position signal in dependence on a calculated position based on an amount of rotation of the motor.

10. Method of calibration for determining a rail friction profile to be stored in a device for scanning a selected track in a pattern of substantially parallel tracks on a record carrier via a beam of radiation, the device comprising a head for providing the beam, tracking servo means for positioning the head on the track, the tracking servo means comprising, for constituting a main servo loop, a motor for moving the head along a rail transverse to the tracks, position means for generating a position signal in dependence an actual position of the head, and amplifying means having an adjustable gain for, in dependence on the position signal and a target position, generating a driving signal coupled to the motor, and tracking adjustment means for adjusting the gain in dependence on the friction profile, the method comprising
detecting a friction value of a plurality of parts of the rail by determining a minimum amount of power of the driving signal which is sufficient to move the head along said parts.

11. Computer program product for calibration of a device for scanning a record carrier, which program is operative to cause a processor to perform the method as claimed in claim 10.

## Patentansprüche

1. Einrichtung zum Abtasten einer ausgewählten Spur in einem Muster von im Wesentlichen parallelen Spuren auf einem Aufzeichnungsträger (11) mittels eines Strahls (24), wobei die Einrichtung umfasst:
- einen Kopf (22) zum Bereitstellen des Strahls,
- Tracking-Servomittel (25) zum Positionieren des Kopfes auf der Spur,
wobei die Tracking-Servomittel umfassen, um einen Hauptservokreis zu bilden: einen Motor (40) zum Bewegen des Kopfes entlang einer Schiene (46) quer zu den Spuren, Positionsmittel (41) zum Erzeugen eines Positionssignals in Abhängigkeit von einer Ist-Position des Kopfes und Verstärkungsmittel (44) mit einem einstellbaren Verstärkungsfaktor zum Erzeugen, in Abhängigkeit von dem Positionssignal und einer Zielposition, eines mit dem Motor gekoppelten Ansteuersignals, **dadurch gekennzeichnet, dass** die Einrichtung ferner umfasst:
- Tracking-Einstellmittel (32) zum Einstellen des Verstärkungsfaktors in Abhängigkeit von einem Reibungsprofil und
- Mittel (34) zum Speichern des Reibungsprofils, das während eines Kalibriervorgangs bestimmt wurde.

2. Einrichtung nach Anspruch 1, wobei die Tracking-Einstellmittel (32) dafür vorgesehen sind, das Reibungsprofil als eine Folge von Verstärkungswerten (57) für aufeinanderfolgende Teile der Schiene zu speichern.

3. Einrichtung nach Anspruch 1, wobei die Tracking-Einstellmittel (32) dafür vorgesehen sind, den Kalibriervorgang auszuführen.

4. Einrichtung nach Anspruch 3, wobei der Kalibriervorgang das Detektieren eines Reibungswertes mindestens eines Teils der Schiene durch Bestimmen eines minimalen Betrages der Leistung des Ansteuersignals, welche ausreichend ist, um den Kopf entlang dieses Teils zu bewegen, umfasst.

5. Einrichtung nach Anspruch 4, wobei der Kalibriervorgang das Bestimmen des minimalen Betrages der Leistung durch schrittweises Verringern des Betrages der Leistung, bis eine erwartete Bewegungsdistanz nicht erreicht wird, oder durch schrittweises Erhöhen des Betrages der Leistung, bis eine erwartete Bewegungsdistanz erreicht wird, umfasst.

6. Einrichtung nach Anspruch 4, wobei der Kalibriervorgang das Bestimmen des Reibungsprofils durch Ableiten eines Verstärkungswertes, der diesem minimalen Betrag entspricht, erhöht um eine vordefinierte Sicherheitsspanne, umfasst.

7. Einrichtung nach Anspruch 3, wobei die Tracking-Einstellmittel (32) dafür vorgesehen sind, den Kalibriervorgang auf der Basis mindestens einer der folgenden Bedingungen auszuführen:
- wenn seit einem vorhergehenden Kalibriervorgang eine vorgegebene Zeit vergangen ist,
- wenn seit einem vorhergehenden Kalibriervorgang ein vorgegebener Umfang der Verwendung in Betrieb stattgefunden hat;
- wenn die Einrichtung an eine Netzstromquelle angeschlossen ist:
- wenn eine Menge an Positionierfehlern nach einer Bewegung des Kopfes detektiert wird;
- wenn ein Betrag der Abweichung bei den Positionierfehlern überschritten wird.

8. Einrichtung nach Anspruch 3, wobei die Tracking-Einstellmittel (32) dafür vorgesehen sind, den Kalibriervorgang als einen Hintergrundprozess auszuführen, wenn kein Abtasten der Spuren erforderlich ist.

9. Einrichtung nach Anspruch 1, wobei die Positionsmittel (41) dafür vorgesehen sind, das Positionssignal in Abhängigkeit von einer berechneten Position auf der Basis eines Betrages der Rotation des Motors zu erzeugen.

10. Verfahren zum Bestimmen eines Schienenreibungsprofils, das in einer Einrichtung zum Abtasten einer ausgewählten Spur in einem Muster von im Wesentlichen parallelen Spuren auf einem Aufzeichnungsträger mittels eines Strahls gespeichert werden soll, wobei die Einrichtung umfasst: einen Kopf zum Bereitstellen des Strahls, Tracking-Servomittel zum Positionieren des Kopfes auf der Spur, wobei die Tracking-Servomittel, um einen Hauptservokreis zu bilden, einen Motor zum Bewegen des Kopfes entlang einer Schiene quer zu den Spuren, Positionsmittel zum Erzeugen eines Positionssignals in Abhängigkeit von einer Ist-Position des Kopfes und Verstärkungsmittel mit einem einstellbaren Verstärkungsfaktor zum Erzeugen, in Abhängigkeit von dem Positionssignal und einer Zielposition, eines mit dem Motor gekoppelten Ansteuersignals umfassen, und Tracking-Einstellmittel zum Einstellen des Verstärkungsfaktors in Abhängigkeit von einem Reibungsprofil, wobei das Verfahren umfasst:
Detektieren eines Reibungswertes mehrerer Teile der Schiene durch Bestimmen eines minimalen Betrages der Leistung des Ansteuersignals, welche ausreichend ist, um den Kopf entlang der Teile zu bewegen.

11. Computerprogrammprodukt zur Kalibrierung einer Einrichtung zum Abtasten eines Aufzeichnungsträgers, wobei das Programm geeignet ist zu bewirken, dass ein Prozessor das Verfahren nach Anspruch 10 ausführt.

## Revendications

1. Dispositif pour balayer une piste sélectionnée dans une configuration de pistes essentiellement parallèles sur un support d'enregistrement (11) via un faisceau de radiation (24), le dispositif comprenant
- une tête (22) pour produire le faisceau,
- un moyen de servocommande de pistage (25) pour positionner la tête sur la piste, le moyen de servocommande comprenant, pour constituer une boucle de servocommande principale, un moteur (40) pour déplacer la tête le long d'un rail (46) transversal aux pistes, un moyen de positionnement (41) pour générer un signal de position en fonction de la position réelle de la tête, et un moyen d'amplification (44) ayant un gain réglable pour, en fonction du signal de position et de la position cible, générer un signal pilote couplé au moteur, **caractérisé en ce que** le dispositif comprend de plus :
- un moyen de réglage du pistage (32) pour régler le gain en fonction d'un profil de frottement, et
- un moyen (34) pour stocker le profil de frottement tel que déterminé pendant un processus d'étalonnage.

2. Dispositif selon la revendication 1, dans lequel le moyen de réglage du pistage (32) est configuré pour stocker le profil de frottement sous forme de séquence de valeurs de gain (57) pour des parties consécutives du rail.

3. Dispositif selon la revendication 1, dans lequel le moyen de réglage du pistage (32) est configuré pour effectuer le processus d'étalonnage.

4. Dispositif selon la revendication 3, dans lequel le processus d'étalonnage comprend la détection une valeur du frottement d'au moins une partie du rail en déterminant une quantité minimum de puissance du signal pilote qui est suffisante pour déplacer la tête le long de ladite partie.

5. Dispositif selon la revendication 4, dans lequel le processus d'étalonnage comprend la détermination de la quantité minimum de puissance en réduisant séquentiellement la quantité de puissance jusqu'à ce qu'une distance de déplacement attendue ne soit pas atteinte, ou en augmentant séquentiellement la quantité de puissance jusqu'à ce qu'une distance de déplacement attendue soit atteinte.

6. Dispositif selon la revendication 4, dans lequel le processus d'étalonnage comprend la détermination du profil de frottement en déduisant une valeur de gain correspondant à ladite quantité minimum augmentée d'une marge prédéfinie.

7. Dispositif selon la revendication 3, dans lequel le moyen de réglage du pistage (32) est configuré pour réaliser l'étalonnage basé sur au moins l'une des conditions suivantes :
- si une période de temps prédéterminée s'est écoulée depuis un processus d'étalonnage précédent ;
- si une période de temps prédéterminée d'utilisation opérationnelle s'est écoulée depuis un processus d'étalonnage précédent;
- si le dispositif est raccordé à une source de puissance du secteur ;
- si un nombre d'erreurs de positionnement après un mouvement de la tête est détecté;
- si une valeur d'écart des erreurs de positionnement est dépassée.

8. Dispositif selon la revendication 3, dans lequel le moyen de réglage du pistage (32) est configuré pour effectuer le processus d'étalonnage en tant que processus d'arrière-plan lorsqu'aucun balayage des pistes n'est requis.

9. Dispositif selon la revendication 1, dans lequel le moyen de positionnement (41) est configuré pour générer le signal de position en fonction d'une position calculée basée sur un nombre de tours du moteur.

10. Procédé d'étalonnage pour déterminer un profil de frottement d'un rail devant être stocké dans un dispositif pour balayer une piste sélectionnée dans une configuration de pistes essentiellement parallèles sur un support d'enregistrement via un faisceau de radiation, le dispositif comprenant une tête pour produire le faisceau, un moyen de servocommande du pistage pour positionner la tête sur la piste, le moyen de servocommande de pistage comprenant, pour constituer une boucle de servocommande principale, un moteur pour déplacer la tête le long d'un rail transversal aux pistes, un moyen de positionnement pour générer un signal de position en fonction d'une position réelle de la tête, et un moyen d'amplification ayant un gain réglable pour, en fonction du signal de position et de la position cible, générer un signal pilote couplé au moteur, et un moyen de réglage du pistage pour régler le gain en fonction du profil de frottement, le procédé comprenant :
la détection d'une valeur de frottement d'une pluralité de parties du rail en déterminant une quantité de puissance minimum du signal pilote qui est suffisant pour déplacer la tête le long desdites parties.

11. Produit de programme informatique pour l'étalonnage d'un dispositif pour le balayage d'un support d'enregistrement, lequel programme est fonctionnel pour faire effectuer par un processeur le procédé selon la revendication 10.
